# EUROPÄISCHE PATENTSCHRIFT

(11) **EP 2 159 599 B1**
(45) Veröffentlichungstag und Bekanntmachung des Hinweises auf die Patenterteilung: **20.04.2011**
(21) Anmeldenummer: 09009175.2
(22) Anmeldetag: 14.07.2009
(51) Int. Cl.: G01S 7/481

(54) **Optoelektronischer Sensor**
Optoelectronic sensor
Capteur optoélectronique

(30) Priorität: 28.08.2008 DE 202008011469 U
(43) Veröffentlichungstag der Anmeldung: 03.03.2010
(73) Patentinhaber: SICK AG, 79183 Waldkirch/Breisgau (DE)
(72) Erfinder: Ihle, Marc, 79183 Waldkirch (DE)
(74) Vertreter: Manitz, Finsterwald & Partner GbR

(56) Entgegenhaltungen:
- EP-A1- 0 987 564
- WO-A1-94/11758
- US-A- 4 752 799
- US-A- 5 354 977

## Beschreibung

Die vorliegende Erfindung betrifft optoelektronische Sensoren mit einer Sendeoptik und mehreren Lichtquellen.

Derartige optoelektronische Sensoren werden häufig als Lichtschranken oder Lichttaster eingesetzt, um die Anwesenheit eines Objekts in einem Überwachungsbereich des Sensors zu erkennen. Bei vielen Anwendungen ist es dabei erwünscht, dass insbesondere auch kleine Objekte sicher erkannt werden können. Dabei sollen die Objekte ferner je nach Applikation aus unterschiedlich weiter Entfernung vom Sensor fehlerfrei detektierbar sein. Um dies zu erreichen, wird eine Anordnung benötigt, die es ermöglicht, in der Erkennungsebene mit einem möglichst kleinen Lichtfleck zu arbeiten.

Für die Erkennung von kleinen Objekten in unterschiedlichen Entfernungen werden oftmals Lichtschranken oder Lichttaster verwendet, die einen Laser als Lichtquelle aufweisen, da dieser die positive Eigenschaft aufweist, dass sich der Lichtstrahl auch über große Entfernungen hinweg kaum aufweitet. Damit lässt sich auch über einen großen Entfernungsbereich ein kleiner Lichtfleck-Durchmesser in der Erkennungsebene realisieren. Die Verwendung von Laserlicht bei Lichtschranken und Lichttastern ist jedoch sehr kostspielig. Da Laserdioden zudem nur eine begrenzte Lebensdauer aufweisen, erweist sich ihr Einsatz bei vielen Anwendungen als unwirtschaftlich.

Alternativ werden auch Lichtschranken und Lichttaster mit LEDs als Lichtquelle verwendet. In diesem Fall wird der Lichtstrahl auf eine feste Entfernung fokussiert, so dass der Lichtstrahl in der Fokusebene einen kleinen Lichtfleck aufweist. Davor und dahinter weitet sich der Lichtstrahl allerdings auf, so dass eine solche Vorrichtung nur für einen vorgegebenen Entfernungsbereich eingesetzt werden kann.

Um bei einer Verwendung von LEDs in Lichtschranken und Lichttastern dennoch unterschiedliche Entfernungen einstellen zu können, kann die als Schnittweite bezeichnete Entfernung zwischen LED und Sendelinse über eine mechanische Verstelleinrichtung justiert werden. Eine mechanische Einstellung der Schnittweite ist jedoch kostspielig. Zudem kann sich die eingestellte Schnittweite bei Erschütterung verstellen.

Allgemein weisen bekannte Lichtschranken und Lichttaster mit Laser oder LEDs als Lichtquelle im Nahbereich eine verringerte Empfindlichkeit auf, sofern die Empfangs- und Sendelinse geometrisch voneinander getrennt angebracht sind. Bei Autokollimations-Systemen, d.h. Lichtschranken oder Lichttastern mit nur einer Sende-/Empfangslinse und einem Strahlteiler-Spiegel wird dieser Nachteil vermieden. Diese Systeme sind jedoch kostspieliger.

US 4 752 799 offenbart eine Optik zur optischen Abstandserfassung mit zwei Energiequellen in unterschiedlicher Entfernung von einer zu vermessenden Oberfläche, welche Energie mit gleicher Frequenz, aber unterschiedlicher Phasenlage aussenden. Von der zu vermessenden Oberfläche reflektierte Energie wird von einem Detektor empfangen, der eine Vektorsumme der zwei Reflexionen bildet, deren Phase mit dem Abstand der zu vermessenden Oberfläche variiert.

In US 5 354 977 A ist ein Barcodescannerkopf zum Scannen von ein- und zweidimensionalen Barcodes aus unterschiedlichen Entfernungen vom zu scannenden Barcode offenbart. Dabei ist eine Vielzahl von LEDs zur Beleuchtung des Barcodes mit unterschiedlichem Abstand sowohl zu einer optischen Achse als auch einer senkrecht dazu verlaufenden Hauptebene gezeigt.

EP 0 987 564 A1 offenbart eine Vorrichtung zur optischen Distanzmessung mit zwei optischen Lichtquellen, die eine beugungsbegrenzte und eine divergente Strahlung über Einkoppelelemente durch ein Objektiv emittieren.

In WO 94/11758 A1 ist eine Vorrichtung zur Positionsermittlung eines Betrachters relativ zu einem von vielen Lichtquellen erleuchteten Schirm offenbart, bei der vom Betrachter reflektiertes Licht aufgefangen und ausgewertet wird, um festzustellen, an welcher Position und in welchem Abstand sich der Betrachter relativ zum Schirm befindet.

Eine Aufgabe der Erfindung besteht darin, ein kostengünstiges System zur Verfügung zu stellen, bei dem für unterschiedliche Entfernungen zwischen Objekt und Sensor in einem Überwachungsbereich jeweils eine hohe Ortsauflösung erzielbar ist.

Die Lösung dieser Aufgabe erfolgt durch die Merkmale des unabhängigen Vorrichtungsanspruchs. Vorteilhafte Weiterbildungen sind in den Unteransprüchen beschrieben.

Ein erfindungsgemäßer optoelektronischer Sensor weist mindestens zwei Lichtquellen auf, die in unterschiedlicher Entfernung von einer Sendeoptik bzw. in unterschiedlicher Entfernung von einer rechtwinklig zur optischen Achse der Sendeoptik verlaufenden Hauptebene der Sendeoptik insbesondere so angeordnet sind, dass von den Lichtquellen ausgesandte Lichtstrahlen direkt auf die Sendeoptik auftreffen. Durch die unterschiedliche Entfernung der Lichtquellen von der Hauptebene der Sendeoptik werden die von den Lichtquellen ausgesandten Strahlen auf unterschiedliche Entfernungen fokussiert. Bei einer Verwendung des erfindungsgemäßen optoelektronischen Sensors kann somit diejenige Lichtquelle ausgewählt werden, deren Lichtstrahlen bei Tastern am besten auf das jeweils zu detektierende Objekt bzw. bei Lichtschranken auf einen Reflektor oder einen separaten Empfänger fokussieren, d.h. auf dem Objekt/ Reflektor/ Empfänger den kleinstmöglichen Lichtfleck erzeugen. Diese Einstellung auf unterschiedliche Entfernungen wird erfindungsgemäß also einzig und allein durch die wahlweise Aktivierung einer von mehreren Lichtquellen erreicht, ohne dass hierbei ein Bauteil des Sensors relativ zu einem anderen Bauteil des Sensors bewegt werden muss. Für die Entfernungseinstellung ist also keinerlei Mechanik nötig, vielmehr genügt eine einfache schaltungstechnische Maßnahme.

Die optische Achse der Sendeoptik verläuft erfindungsgemäß parallel zu der optischen Achse der Empfangsoptik und von dieser beabstandet, und eine scheinbare optische Achse des optoelektronischen Sensors verläuft parallel zu und in der Mitte zwischen der optischen Achse der Sendeoptik und der optischen Achse einer Empfangsoptik. Die scheinbare optische Achse eines solchen zweiäugigen Systems kann aber auch durch entsprechende Anordnung der Lichtquellen gekrümmt verlaufen, bevorzugt derart, dass der Fokuspunkt für größere Entfernungen auf oder im Bereich der optischen Achse der Sendeoptik und für kleinere Entfernungen näher bei der optischen Achse der Empfangsoptik liegt.

Ferner sind die mindestens zwei Lichtquellen erfindungsgemäß auf einer Geraden angeordnet, welche mit der scheinbaren optischen Achse des optoelektronischen Sensors und der Hauptebene der Sendeoptik einen gemeinsamen Schnittpunkt bildet. Nach der Scheimpflug-Bedingung wird somit erreicht, dass durch diese Anordnung der Lichtquellen der Fokuspunkt jeder Lichtquelle auf der scheinbaren optischen Achse des optoelektronischen Sensors liegt, wodurch sich Montage und Inbetriebnahme des Sensors vereinfachen lassen.

Es ist bevorzugt, dass der optoelektronische Sensor insbesondere in einem für die Lichtquellen und die Sendeoptik vorgesehenen gemeinsamen Gehäuse auch eine Empfangseinheit mit einer eine optische Achse aufweisenden Empfangsoptik zum Empfangen von Lichtstrahlen besitzt. Somit kann Licht, das von einer der mindestens zwei Lichtquellen ausgestrahlt und von dem zu detektierenden Objekt reflektiert wird, durch die Empfangsoptik auf die Empfangseinheit geleitet werden, und die Empfangseinheit kann durch Auswertung der empfangenen Lichtstrahlen ermitteln, ob ein Objekt vorhanden ist.

Bei einer bevorzugten Ausführungsform sind die mindestens zwei Lichtquellen in unterschiedlicher Entfernung von der optischen Achse der Sendeoptik derart angeordnet, dass mindestens ein von einer der Lichtquellen ausgesandter Lichtstrahl nach der Durchquerung der Sendeoptik eine Neigung zu der optischen Achse der Empfangsoptik aufweist. Durch diese Anordnung kann erreicht werden, dass der Nahblindbereich, d.h. die vorstehend erwähnte reduzierte Empfindlichkeit herkömmlicher optoelektronischer Sensoren im Nahbereich, verringert ist. Zu diesem Zweck sind die Lichtstrahlen der für den Nahbereich vorgesehenen Lichtquellen stärker gegenüber der optischen Achse der Empfangsoptik geneigt als diejenigen Lichtstrahlen, die für größere Entfernungen vorgesehen sind.

Vorteilhafter Weise sind die mindestens zwei Lichtquellen bezüglich der Sendeoptik unverschiebbar angeordnet. Eine feste, d.h. unverschiebbare Anordnung der mindestens zwei Lichtquellen ist zum einen wesentlich kostengünstiger herstellbar als eine Anordnung, bei der die Lichtquellen mechanisch verstellt werden können, und zum anderen unempfindlich gegen mechanische Erschütterungen.

Die mindestens zwei Lichtquellen können als LEDs ausgebildet werden. Auf diese Weise lässt sich der optoelektronische Sensor gegenüber solchen, bei denen Laser eingesetzt werden, kostengünstiger herstellen. Zudem wird eine hohe Lebensdauer bei geringen Betriebskosten erreicht.

Es ist vorteilhaft, bei der Empfangseinheit des optoelektronischen Sensors einen positionsempfindlichen Detektor zu verwenden, um aus der Position des auftreffenden Lichtstrahls die Entfernung des zu detektierenden Objekts bestimmen zu können. Der positionsempfindliche Detektor kann dabei beispielsweise als ein- oder mehrteiliges Fotodioden-Array, CCD (Charge Coupled Device) oder PSD (Position Sensitive Device) ausgebildet sein.

Zu Beginn der Inbetriebnahme eines Sensors mit positionsempfindlichem Detektor erfolgt bevorzugt ein Teach-Vorgang, im Rahmen dessen geprüft wird, mit welcher Lichtquelle der kleinste (und somit schärfste) Empfangslichtfleck auf dem positionsempfindlichen Detektor erhalten wird. Diese Lichtquelle wird dann im Echtbetrieb verwendet. Zudem wird derjenige Bereich des positionsempfindlichen Empfänger "scharf geschaltet", der diesen einen Empfangslichtfleck detektiert. Eine Erkennung erfolgt in diesem Fall folglich immer nur dann, wenn an der vorbestimmten Stelle ein Empfangslichtfleck auftritt.

Weiterhin kann bei Einsatz eines positionsempfindlichen Detektors die Entfernung eines detektierten Objekts von dem optoelektronischen Sensor beispielsweise mittels des bekannten Triangulationsverfahrens bestimmt werden.

Weitere bevorzugte Ausführungsformen der Erfindung sind in den Unteransprüchen angegeben.

Nachfolgend wird die vorliegende Erfindung anhand von bevorzugten Ausführungsformen unter Bezugnahme auf die Zeichnung beschrieben. In den verschiedenen Figuren der Zeichnung sind für bestimmte Elemente der unterschiedlichen Ausführungsformen die gleichen Bezugszeichen verwendet, um einander entsprechende Elemente der unterschiedlichen Ausführungsformen zu bezeichnen.
- Fig. 1A bis 1C: zeigt den prinzipiellen Strahlenverlauf bei drei Licht- quellen, die erfindungsgemäß in unterschiedlichen Ab- ständen von einer Sendeoptik angeordnet sind.
- Fig. 2A und 2B: zeigen verschiedene Strahlengänge zwischen Lichtquel- len und Empfangseinheiten.
- Fig. 3 bis 5: zeigen drei Strahlengänge einer beispielhaften Ausfüh- rungsform eines zweiäugigen optoelektronischen Sen- sors.

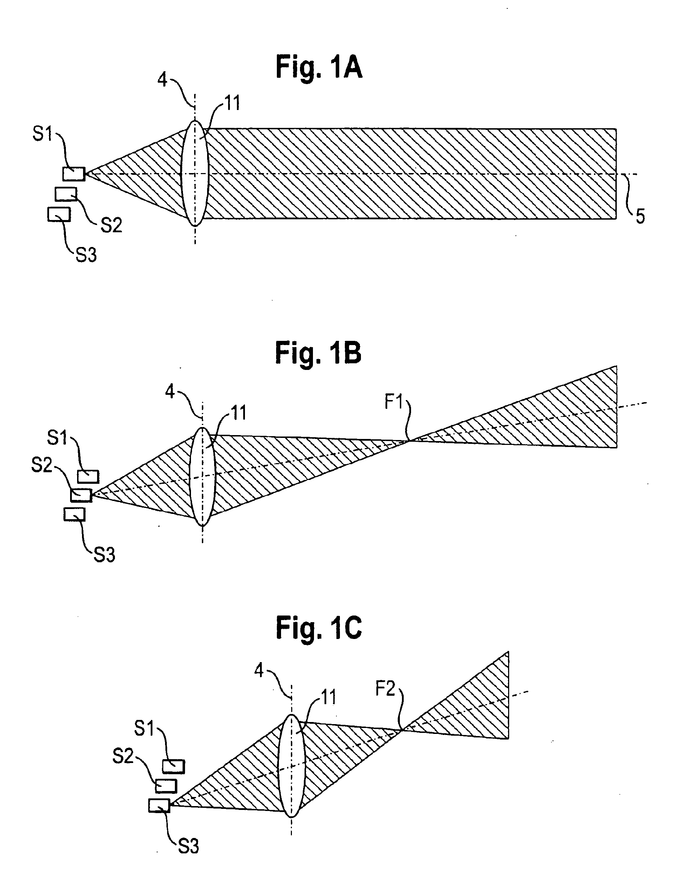

In Fig. 1A bis 1C ist prinzipiell veranschaulicht, wie die Strahlengänge von Lichtquellen S1, S2 und S3 durch eine als Sammellinse dargestellte Sendeoptik 11 verlaufen, wenn die Lichtquellen S1, S2 und S3 in unterschiedlichen Abständen von einer Hauptebene 4 der Sendeoptik und in unterschiedlichen Abständen von der optischen Achse 5 der Sendeoptik angeordnet sind.

Der Strahlengang von Fig. 1A für die Lichtquelle S1, die im Brennpunkt der Sendeoptik 11 angeordnet ist, zeigt eine Fokussierung auf unendlich. Die Lichtquelle S2 liegt außerhalb des Brennpunkts der Sendeoptik 11 und ist leicht unterhalb der optischen Achse 5 der Sendeoptik 11 angeordnet.

Wie Fig. 1B zeigt, wird das Licht der Lichtquelle S2 in einem Punkt F1 fokussiert, an dem sich vorzugsweise das nicht dargestellte zu detektierende Objekt befinden sollte, um dort einen möglichst kleinen, konzentrierten Lichtfleck zu erzeugen, der von einer nicht gezeigten Empfangsoptik auf eine nicht gezeigte Empfangseinheit abgebildet werden kann. Da die Lichtquelle S2 von der Hauptebene 4 der Sendeoptik weiter entfernt ist als die Lichtquelle S1, liegt der Fokuspunkt F1 der Lichtquelle S2 näher an der Hauptebene 4 der Sendeoptik 11 als der Fokuspunkt der Lichtquelle S1, der im Unendlichen liegt. Zudem ist der Fokuspunkt F 1 bezüglich der optischen Achse 5 der Sendeoptik 11 leicht nach oben verschoben.

Der in Fig. 1C gezeigte Strahlengang der dritten Lichtquelle S3 zeigt, dass der Fokuspunkt F2 in diesem Fall noch näher bei der Hauptebene 4 der Sendeoptik 11 liegt als bei den Strahlengängen der Lichtquellen S 1 und S2, und auch noch weiter nach oben verschoben ist. Diese Verschiebung ist darauf zurückzuführen, dass die Lichtquelle S3 von der optischen Achse 5 der Sendeoptik 11 weiter beabstandet ist, als die Lichtquelle S2 bzw. S 1. Der kürzere Abstand des Fokuspunkts F2 von der Hauptebene 4 der Sendeoptik 11 ist dadurch bedingt, dass die Lichtquelle S3 von der Hauptebene 4 der Sendeoptik 11 weiter entfernt angeordnet ist.

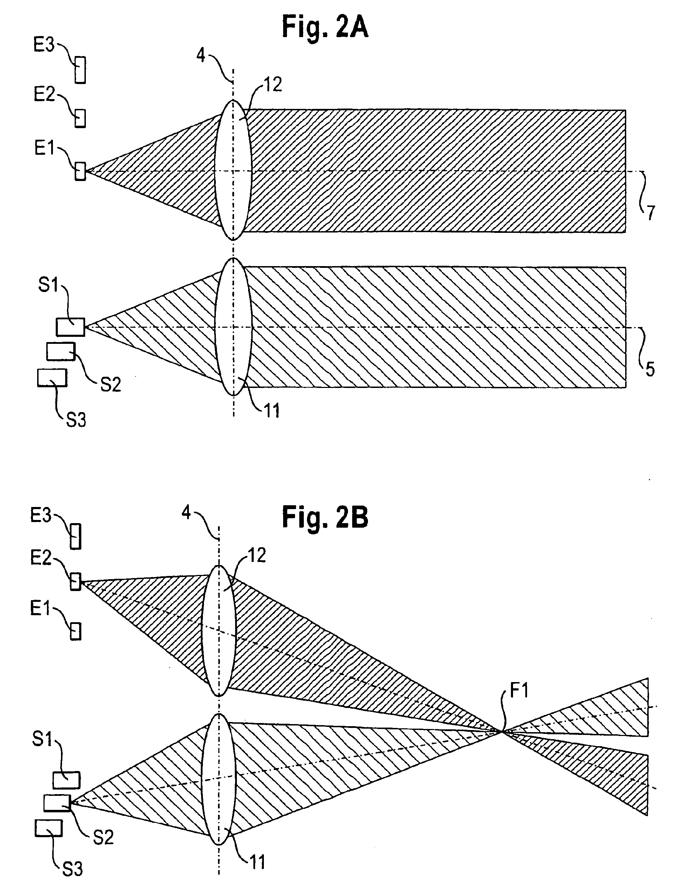

In Fig. 2A und 2B sind zusätzlich zur Sendeoptik 11 jeweils eine Empfangsoptik 12, deren Hauptebene mit der Hauptebene 4 der Sendeoptik 12 übereinstimmt, und drei Empfangseinheiten E1, E2 und E3 dargestellt. Der Strahlengang von Fig. 2A zeigt die ins Unendliche gerichtete Fokussierung der Lichtquelle S 1. Das an einem nicht gezeigten Objekt reflektierte oder remittierte Licht wird von der Empfangsoptik 12 gebündelt und auf die Empfangseinheit E 1 abgebildet. Aufgrund der Fokussierung ins Unendliche lässt sich mit dieser Anordnung zwar das Vorhandensein eines Objekts detektieren, eine genaue Bestimmung des Abstandes zwischen dem Objekt und dem optoelektronischen Sensor ist jedoch nicht möglich.

Wie in Fig. 2B gezeigt ist, wird Licht, das von der Lichtquelle S2 ausgesandt wird, in dem Punkt F1 fokussiert, an dem sich im Idealfall das zu detektierende Objekt befindet. In diesem Fall reflektiert oder remittiert das Objekt einen kleinen, fokussierten Lichtfleck, der von der Empfangsoptik 12 auf die Empfangseinheit E2 gebündelt wird. Diese Anordnung ermöglicht neben der Detektion des Vorhandenseins eines Objekts auch eine genaue Bestimmung des Abstandes des Objekts von dem erfindungsgemäßen optoelektronischen Sensor mit Hilfe des in der Technik bekannten Triangulationsverfahrens.

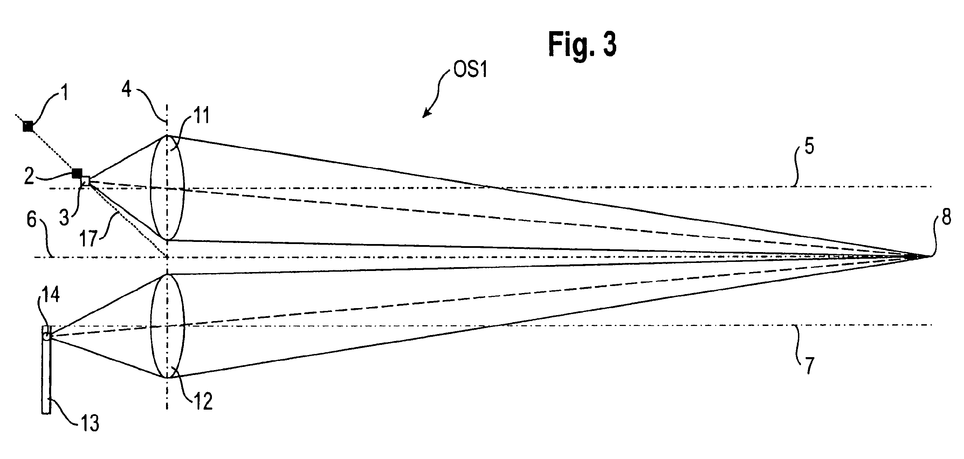

In Fig. 3 bis 5 ist jeweils ein zweiäugiges System OS mit zwei Sammellinsen 11 und 12, drei LEDs 1, 2 und 3 und einer räumlich ausgedehnten, positionsempfindlichen Empfangseinheit 13 dargestellt. Die beiden Sammellinsen 11 und 12, welche die Sendeoptik und die Empfangsoptik darstellen, weisen bei dieser Ausführungsform eine gemeinsame Hauptebene 4 auf. Die optische Achse 5 der Sendeoptik 11 verläuft parallel zu der optischen Achse 7 der Empfangsoptik 12 und ist von dieser beabstandet. In der Mitte zwischen den beiden optischen Achsen 5 und 7 verläuft die scheinbare optische Achse 6 des optoelektronischen Sensors OS 1.

In Fig. 3 ist der Strahlengang der LED 3 dargestellt, die nahe an der Hauptebene 4 der Sendeoptik 11 und nahe an der optischen Achse 5 der Sendeoptik 11 angeordnet ist. Dementsprechend liegt der Fokuspunkt 8, den die LED 3 unter Verwendung der Sendeoptik 11 erzeugt, relativ weit von der Hauptebene 4 der Sendeoptik 11 entfernt. Ein im Fokuspunkt 8 vorhandenes Objekt reflektiert oder remittiert das von der LED 3 ausgestrahlte Licht auf die Empfangsoptik 12, die das Licht gebündelt auf die Empfangseinheit 13 lenkt. Die Empfangseinheit 13 ist bei der gezeigten Ausführungsform von der Empfangsoptik 12 beabstandet derart angeordnet, dass der in Fig. 3 gezeigte Strahlengang zu einem kleinen Lichtfleck 14 auf der Empfangseinheit 13 führt. Mit Hilfe des bekannten Triangulationsverfahrens kann aufgrund der Position des Lichtflecks 14 auf der Empfangseinheit 13 auf den Abstand zwischen dem zu detektierenden Objekt und dem optoelektronischen Sensor OS 1 bzw. der Hauptebene 4 der Sendeoptik 11 des OS1 geschlossen werden.

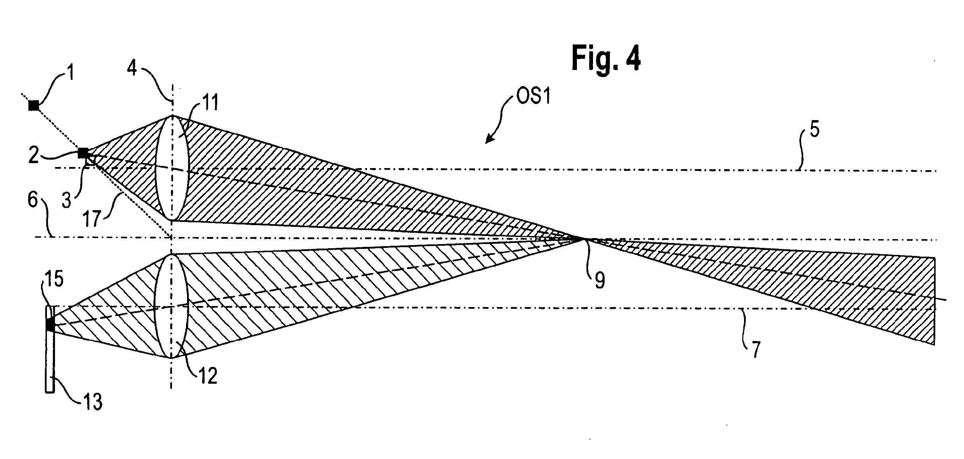

In Fig. 4 ist der Strahlengang des Lichts gezeigt, das von der LED 2 ausgesandt wird. Die LED 2 ist weniger nahe an der Hauptebene 4 der Sendeoptik 11 und weniger nahe an der optischen Achse 5 der Sendeoptik 11 angeordnet als die LED 3. Das von der LED 2 ausgesandte Licht fokussiert in dem Fokuspunkt 9 und wird, sofern sich dort ein zu detektierendes Objekt befindet, reflektiert bzw. remittiert und über die Empfangsoptik 12 auf die Empfangseinheit 13 als Lichtfleck 15 abgebildet. Der Lichtfleck 15 ist im Vergleich zu Lichtfleck 14 von Fig. 3 etwas versetzt und etwas größer, d.h. unschärfer, da die Empfangsoptik 12 den Fokuspunkt 9 aufgrund ihrer Brennweite nicht genau auf die Empfangseinheit 13 abbilden kann. Die Position des Lichtflecks 15 kann wiederum unter Verwendung des Triangulationsverfahrens zur Ermittlung des Abstandes des zu detektierenden Objekts von dem optoelektronischen Sensor OS 1 benutzt werden.

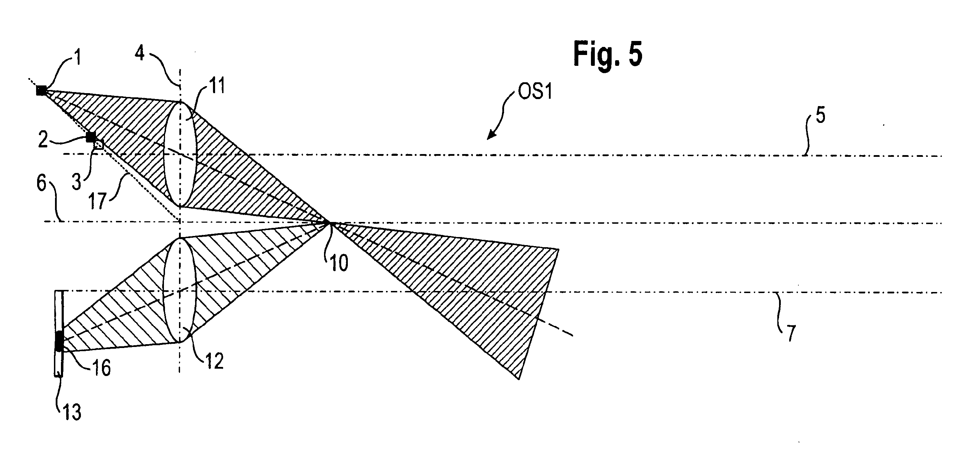

In Fig. 5 ist der Strahlengang von Licht dargestellt, das von der LED 1 ausgesandt wird. Die LED 1 ist weniger nahe an der Hauptebene 4 der Sendeoptik 11 und weniger nahe an der optischen Achse 5 der Sendeoptik 11 angeordnet als die LED 2. Das Licht dieser LED wird von der Sendeoptik 11 im Fokuspunkt 10 fokussiert, der relativ nahe an der Sendeoptik 11 liegt. Ein Objekt, das sich an dieser Stelle befindet, wird das Licht reflektieren bzw. remittieren, so dass es von der Empfangsoptik 12 aufgenommen und gebündelt werden kann und als Lichtfleck 16 auf der Empfangseinheit 13 abgebildet wird. Der Lichtfleck 16 ist im Vergleich zu den Lichtflecken 14 und 15 von Fig. 3 und Fig. 4 auf der Empfangseinheit 13 versetzt angeordnet. Ferner ist er größer, d.h. unschärfer, als die Lichtflecke 14 und 15. Dies ist auf die Brennweite der Empfangsoptik 12 zurückzuführen, wie voranstehend in Zusammenhang mit Fig. 4 erläutert wurde. Aus der Position des Lichtflecks 16 kann wiederum über das Triangulationsverfahren auf den Abstand des Objekts von dem optoelektronischen Sensor OS 1 geschlossen werden.

Die Fokuspunkte 8, 9, 10 der Fig. 3, 4 und 5 liegen allesamt auf der scheinbaren optischen Achse 6 des optoelektronischen Sensors OS 1. Diese Eigenschaft erleichtert eine Einrichtung bzw. Inbetriebnahme des optoelektronischen Sensors und wird dadurch erreicht, dass die drei LEDs 1, 2 und 3 auf einer Geraden 17 angeordnet sind, welche die Hauptebene 4 der Sendeoptik 11 in der scheinbaren optischen Achse 6 des optoelektronischen Sensors OS 1 schneidet, was aufgrund der Scheimpflugschen Regel dazu führt, dass alle Fokuspunkte 8, 9 und 10 auf dieser scheinbaren optischen Achse 6 liegen.

Es ist nicht zwingend erforderlich, die Lichtquellen bzw. LEDs 1, 2, 3 wie in Fig. 3 bis 5 dargestellt auf einer Geraden 17 anzuordnen, um zu erreichen, dass alle Fokuspunkte auf der scheinbaren optischen Achse 6 des optoelektronischen Sensors liegen. Je nach Ausführung kann es sich als vorteilhaft erweisen, die Lichtquellen bzw. LEDs 1, 2 und 3 anders anzuordnen, so dass die scheinbare optische Achse 6 des optoelektronischen Sensors nicht gerade verläuft, sondern sich beispielsweise so krümmt, dass der Fokus bei größeren Entfernungen auf der Sendeachse 5 liegt und bei geringen Entfernungen in Richtung der Empfangsachse 7 verschoben wird.

Die in den Ausführungsformen gezeigten Lichtquellen sind zur Ausstrahlung elektromagnetischer Wellen vorgesehen, wobei das Spektrum der ausgesandten elektromagnetischen Wellen nicht auf sichtbares Licht beschränkt ist.

## Patentansprüche

1. Optoelektronischer Sensor (OS1) mit einer Sendeoptik (11) und mindestens zwei Lichtquellen (1, 2, 3), die insbesondere zum Emittieren von direkt auf die Sendeoptik (11) auftreffenden Lichtstrahlen ausgelegt sind, wobei die mindestens zwei Lichtquellen (1, 2, 3) in unterschiedlicher Entfernung von einer rechtwinklig zur optischen Achse (5) der Sendeoptik (11) verlaufenden Hauptebene (4) der Sendeoptik angeordnet sind,
**dadurch gekennzeichnet, dass**
die optische Achse (5) der Sendeoptik (11) parallel zu einer optischen Achse (7) einer Empfangsoptik (12) und von dieser beabstandet verläuft und eine scheinbare optische Achse (6) des optoelektronischen Sensors (OS1) parallel zu und in der Mitte zwischen der optischen Achse (5) der Sendeoptik (11) und der optischen Achse (7) der Empfangsoptik (12) verläuft und
die mindestens zwei Lichtquellen (1, 2, 3) auf einer Geraden (17) liegen, welche mit der scheinbaren optischen Achse (6) des optoelektronischen Sensors (OS1) und der Hauptebene (4) der Sendeoptik (11) einen gemeinsamen Schnittpunkt bildet.

2. Optoelektronischer Sensor (OS 1) nach Anspruch 1,
**dadurch gekennzeichnet, dass**
die mindestens zwei Lichtquellen (1, 2, 3) in unterschiedlicher Entfernung von der optischen Achse (5) der Sendeoptik (11) derart angeordnet sind, dass mindestens ein von einer der Lichtquellen (1,2, 3) ausgesandter Lichtstrahl nach der Durchquerung der Sendeoptik (11) eine Neigung zu der optischen Achse (7) der Empfangsoptik (12) aufweist.

3. Optoelektronischer Sensor (OS1) nach einem der vorstehenden Ansprüche,
**dadurch gekennzeichnet, dass**
die mindestens zwei Lichtquellen (1, 2, 3) bezüglich der Sendeoptik (11) unverschiebbar angeordnet sind.

4. Optoelektronischer Sensor (OS1) nach einem der vorstehenden Ansprüche,
**dadurch gekennzeichnet, dass**
die mindestens zwei Lichtquellen (1, 2, 3) LEDs umfassen.

5. Optoelektronischer Sensor (OS1) nach einem der vorstehenden Ansprüche,
**dadurch gekennzeichnet, dass**
die Empfangseinheit (13) einen positionsempfindlichen Detektor, insbesondere ein ein- oder mehrzeiliges Fotodioden-Array, ein CCD (Charge Coupled Device) oder ein PSD (Position Sensitive Device), umfasst.

6. Optoelektronischer Sensor (OS1) nach einem der vorstehenden Ansprüche,
**gekennzeichnet, durch**
eine Auswerteeinheit zur Ermittlung des Abstands zwischen einem detektierten Objekt und dem optoelektronischen Sensor unter Verwendung des Triangulationsverfahrens.

## Claims

1. An optoelectronic sensor (OS1) having an optical transmission device (11) and at least two light sources (1, 2, 3) which are in particular configured for emitting light rays directly incident onto the optical transmission device (11), wherein the at least two light sources (1, 2, 3) are arranged at different distances from a main plane (4) of the optical transmission device extending at a right angle to the optical axis (5) of the optical transmission device (11),
**characterised in that**
the optical axis (5) of the optical transmission device (11) extends parallel to an optical axis (7) of an optical reception device (12) and at a spacing therefrom and an apparent optical axis (6) of the optoelectronic sensor (OS1) extends parallel to and at the centre between the optical axis (5) of the optical transmission device (11) and of the optical axis (7) of the optical reception device (12); and the at least two light sources (1, 2, 3) lie on a straight line (17) which forms a common point of intersection with the apparent optical axis (6) of the optoelectronic sensor (OS1) and the main plane (4) of the optical transmission device (11).

2. An optoelectronic sensor (OS1) in accordance with claim 1,
**characterised in that**
the at least two light sources (1, 2, 3) are arranged at different distances from the optical axis (5) of the optical transmission device (11) such that at least one light ray transmitted from one of the light sources (1, 2, 3) has an incline towards the optical axis (7) of the optical reception device (12) after passing through the optical transmission device (11).

3. An optoelectronic sensor (OS 1) in accordance with one of the preceding claims,
**characterised in that**
the at least two light sources (1, 2, 3) are arranged non-displaceably with respect to the optical transmission device (11).

4. An optoelectronic sensor (OS1) in accordance with any one of the preceding claims,
**characterised in that**
the at least two light sources (1, 2, 3) include LEDs.

5. An optoelectronic sensor (OS 1) in accordance with any one of the preceding claims,
**characterised in that**
the reception unit (13) includes a position-sensitive detector, in particular a single-row or multi-row photodiode array, a CCD (charge coupled device) or a PSD (position sensitive device).

6. An optoelectronic sensor (OS1) in accordance with any one of the preceding claims,
**characterised by**
an evaluation unit for determining the spacing between a detected object and the optoelectronic sensor using the triangulation process.

## Revendications

1. Capteur optoélectronique (OS1) comprenant une optique d'émission (11) et au moins deux sources de lumière (1, 2, 3), qui sont conçues en particulier pour émettre des rayons de lumière qui tombent directement sur l'optique d'émission (11), lesdites au moins deux sources de lumière (1, 2, 3) étant agencées à différentes distances d'un plan principal (4) de l'optique d'émission, s'étendant perpendiculairement à l'axe optique (5) de l'optique d'émission (11),
**caractérisé en ce que**
l'axe optique (5) de l'optique d'émission (11) s'étend parallèlement à un axe optique (7) d'une optique de réception (12) et à distance de celui-ci, et un axe optique apparent (6) du capteur optoélectronique (OS1) s'étend parallèlement à et au milieu entre l'axe optique (5) de l'optique d'émission (11) et l'axe optique (7) de l'optique de réception (12), et lesdites au moins deux sources de lumière (1, 2, 3) sont disposées sur une droite (17) qui forment un point d'intersection commun avec l'axe optique apparent (6) du capteur optoélectronique (OS1) et le plan principal (4) de l'optique d'émission (11).

2. Capteur optoélectronique (OS1) selon la revendication 1,
**caractérisé en ce que** lesdites au moins deux sources de lumière (1, 2, 3) sont agencées à différentes distances de l'axe optique (5) de l'optique d'émission (11) de telle manière qu'au moins un rayon de lumière émis par l'une des sources de lumière (1, 2, 3) présente, après avoir traversé l'optique d'émission (11), une inclinaison par rapport à l'axe optique (7) de l'optique de réception (12).

3. Capteur optoélectronique (OS1) selon l'une des revendications précédentes,
**caractérisé en ce que** lesdites au moins deux sources de lumière (1, 2, 3) sont agencées non déplaçables par rapport à l'optique d'émission (11).

4. Capteur optoélectronique (OS1) selon l'une des revendications précédentes,
**caractérisé en ce que** lesdites au moins deux sources de lumière (1, 2, 3) comprennent des diodes électroluminescentes.

5. Capteur optoélectronique (OS1) selon l'une des revendications précédentes,
**caractérisé en ce que** l'unité de réception (13) comprend un détecteur sensible à la position, en particulier un réseau de photodiodes à une ou plusieurs lignes, un dispositif CCD (Charge Coupled Device) ou un dispositif PSD (Position Sensitive Device).

6. Capteur optoélectronique (OS1) selon l'une des revendications précédentes,
**caractérisé par** une unité d'évaluation pour déterminer la distance entre un objet détecté et le capteur optoélectronique en utilisant la méthode de triangulation.
